# EUROPEAN PATENT APPLICATION

(11) **EP 2 804 414 A1**
(43) Date of publication of application: **19.11.2014**
(21) Application number: 13736192.9
(22) Date of filing: 11.01.2013
(51) Int. Cl.: H04W 24/00

(54) **MOBILE TERMINAL MOVING SPEED OBTAINING METHOD, BASE STATION AND TERMINAL**

(30) Priority: 11.01.2012 CN 201210008529; 12.01.2012 CN 201210008689
(71) Applicant: Huawei Technologies Co., Ltd., Shenzhen, Guangdong 518129 (CN)
(72) Inventor: LIN, Bo, Shenzhen Guangdong 518129 (CN); CHAI, Li, Shenzhen Guangdong 518129 (CN)
(74) Representative: Pfenning, Meinig & Partner GbR
(86) International application number: PCT/CN2013/070372
(87) International publication number: WO 2013/104333

(57) **Abstract**

The present invention relates to a method, a base station, and a terminal for obtaining a moving speed of a mobile terminal. A moving speed of a mobile terminal is obtained by obtaining a distance estimation parameter and using the distance estimation parameter, or a moving speed of a mobile terminal is obtained according to information reported by the mobile terminal, or a moving speed of a mobile terminal is received from another base station, so as to enable a base station to learn the moving speed of the mobile terminal and therefore avoid the problem of call drop caused by slow handover because of a fast moving speed of a mobile terminal.

## Description

This application claims priority to Chinese Patent Application No. 201210008529.9, filed with the Chinese Patent Office on January 11, 2012 and entitled " METHOD FOR OBTAINING MOVING SPEED OF MOBILE TERMINAL, BASE STATION, AND TERMINAL ", and Chinese Patent Application No. 201210008689.3, filed with the Chinese Patent Office on January 12, 2012 and entitled " METHOD FOR OBTAINING MOVING SPEED OF MOBILE TERMINAL, BASE STATION, AND TERMINAL ", which are incorporated herein by reference in their entireties.

### TECHNICAL FIELD

The present invention relates to mobile communications technologies, and in particular, to a method, a base station, and a terminal for obtaining a moving speed of a mobile terminal.

### BACKGROUND

With the development of mobile broadband, bandwidth requirements of end users are increasing, but an existing networking mode based on a macro network will not provide a bit rate required by mobile broadband services.

To further improve system capacities, more low-power access points or small base stations (hereinafter all called small base stations) may be introduced in the range of a macro network, for example, a home base station (Home eNodeB), a micro base station (micro eNodeB), a pico base station (pico eNodeB), a relay base station (Relay eNodeB), a femto base station (femto eNodeB), an RRH (Remote Radio Head, remote radio frequency head), and another access point (access point) in a long term evolution (Long Term Evolution, LTE) technology.

Because transmit power of a small base station is lower than transmit power of a macro base station and the downlink coverage of the small base station is much smaller than the downlink coverage of the macro base station, a hybrid networking mode of the macro base station and the small base station may enhance hot spot coverage, indoor blind spot (or weak spot) coverage, and cell edge coverage of a macro base station, improving cell average throughput, cell edge throughput, cell uplink/downlink frequency spectrum utilization, and lowering network costs and operators' CAPEX (capital expenditure), and so on. A hybrid network formed by a macro base station and a small base station is also called a heterogeneous network.

When a mobile terminal such as a UE is moving in a heterogeneous network, the mobile terminal may frequently travel by cells including various base stations, and therefore need to trigger handovercontinuously. However, when the mobile terminal is moving fast and may travel through a cell transiently, no switching is needed; if handover is performed, the mobile terminal has moved out of a cell to which the mobile terminal hands over when the handover is completed, causing a call drop. Therefore, a method that enables a serving cell to learn a moving speed of a mobile terminal is needed, so as to avoid the problem of call drop caused by untimely handover because of a fast moving speed of a mobile terminal.

### SUMMARY

Embodiments of the present invention provide a method, a base station, and a terminal for obtaining a moving speed of a mobile terminal, so as to enable a serving cell to learn a moving speed of a mobile terminal and avoid the problem of call drop caused by slow handover because of a fast moving speed of a mobile terminal.

An embodiment of the present invention provides a method for obtaining a moving speed of a mobile terminal, including:
obtaining, by a serving base station, a distance estimation parameter, where the distance estimation parameter is used for estimating a distance that a mobile terminal moves in a cell of the serving base station;
obtaining, by the serving base station, according to the obtained distance estimation parameter, the distance that the mobile terminal moves in the cell of the serving base station; and
by using the distance that the mobile terminal moves in the cell of the serving base station and the duration that the mobile terminal stays in the cell of the serving base station, obtaining, by the serving base station, a moving speed of the mobile terminal in the cell of the serving base station.

An embodiment of the present invention further provides a method for obtaining a moving speed of a mobile terminal, including:
establishing a signaling connection with a mobile terminal; and
obtaining a moving speed of the mobile terminal by receiving information reported by the mobile terminal through the signaling connection established with the mobile terminal; .

An embodiment of the present invention further provides a method for obtaining a moving speed of a mobile terminal, including:
receiving a moving speed of a mobile terminal in a source cell that is sent by a base station of the source cell.

An embodiment of the present invention further provides a method for a base station to obtain a moving speed of a mobile terminal, including:
establishing a signaling connection with a serving base station; and
reporting information to the serving base station through the signaling connection established with the serving base station, so as to enable the serving base station to obtain a moving speed of a mobile terminal according to the information.

An embodiment of the present invention further provides a base station, including:
a parameter obtaining unit, adapted to obtain a distance estimation parameter, where the distance estimation parameter is used for estimating a distance that a mobile terminal moves in a cell of a serving base station;
a distance obtaining unit, adapted to obtain, according to the obtained distance estimation parameter, the distance that the mobile terminal moves in the cell of the serving base station; and
a speed obtaining unit, adapted to: by using the distance that the mobile terminal moves in the cell of the serving base station and the duration that the mobile terminal stays in the cell of the serving base station, obtain a moving speed of the mobile terminal in the cell of the serving base station.

An embodiment of the present invention further provides a base station, including:
a connecting unit, adapted to establish a signaling connection with a mobile terminal;
an information receiving unit, adapted to receive information reported by the mobile terminal through the signaling connection established with the mobile terminal; and
a moving speed obtaining unit, adapted to obtain a moving speed of the mobile terminal according to the information reported by the mobile terminal.

An embodiment of the present invention further provides a base station, including:
a receiving unit, adapted to receive a moving speed of a mobile terminal in a source cell that is sent by a base station of the source cell.

According to a method, a base station, and a terminal for obtaining a moving speed of a mobile terminal that are provided by the embodiments of the present invention, a moving speed of a mobile terminal is obtained by obtaining a distance estimation parameter and using the distance estimation parameter, or a moving speed of a mobile terminal is obtained according to information reported by the mobile terminal, or a moving speed of a mobile terminal is received from another base station, so as to enable a base station to learn the moving speed of the mobile terminal and therefore avoid the problem of call drop caused by slow handover because of a fast moving speed of a mobile terminal.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons skilled in the art may still derive other drawings from these accompanying drawings without creative efforts.
FIG. 1 is a flowchart of a method for obtaining a moving speed of a mobile terminal according to an embodiment of the present invention;
FIG. 2A is a schematic diagram of a moving path of a mobile terminal;
FIG. 2B is another schematic diagram of a moving path of a mobile terminal;
FIG. 3 is a flowchart of another method for obtaining a moving speed of a mobile terminal according to an embodiment of the present invention;
FIG. 4A is a graph showing a change relationship between maximum downlink signal receive power and a distance between a UE and a serving base station in a method for obtaining a moving speed of a mobile terminal according to an embodiment of the present invention;
FIG. 4B is a principle diagram of obtaining a distance that a UE moves in a cell of a serving base station in a method for obtaining a moving speed of a mobile terminal according to an embodiment of the present invention;
FIG. 4C is another principle diagram of obtaining a distance that a UE moves in a cell of a serving base station in a method for obtaining a moving speed of a mobile terminal according to an embodiment of the present invention;
FIG. 4D is another principle diagram of obtaining a distance that a UE moves in a cell of a serving base station in a method for obtaining a moving speed of a mobile terminal according to an embodiment of the present invention;
FIG. 5 is a flowchart of another method for obtaining a moving speed of a mobile terminal according to an embodiment of the present invention;
FIG. 6 is a schematic structural diagram of a base station according to an embodiment of the present invention;
FIG. 7 is a schematic structural diagram of another base station according to an embodiment of the present invention; and
FIG. 8 is a schematic structural diagram of a mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

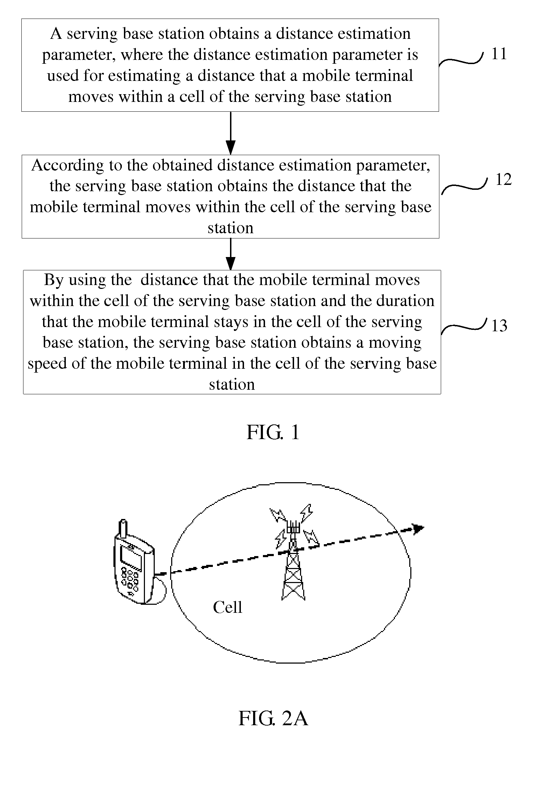

FIG. 1 is a flowchart of a method for obtaining a moving speed of a mobile terminal according to an embodiment of the present invention. As shown in FIG. 1, the method for obtaining a moving speed of a mobile terminal includes:
Step 11: A serving base station obtains a distance estimation parameter, where the distance estimation parameter is used for estimating a distance that a mobile terminal moves in a cell of the serving base station.
Step 12: The serving base station obtains, according to the obtained distance estimation parameter, the distance that the mobile terminal moves in the cell of the serving base station.
Step 13: By using the distance that the mobile terminal moves in the cell of the serving base station and the duration that the mobile terminal stays in the cell of the serving base station, the serving base station obtains a moving speed of the mobile terminal in the cell of the serving base station.

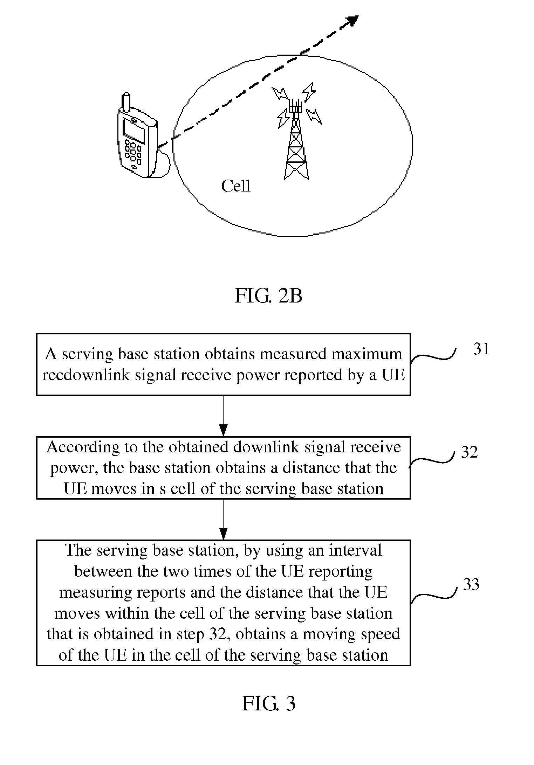

A moving path of a mobile terminal in a cell is actually uncertain as shown in FIG. 2A and FIG. 2B. In FIG. 2A, a mobile terminal travels through a cell radially, so it has a long moving distance in the cell. In FIG. 2B, a mobile terminal travels through a cell tangentially, so it has a short moving distance in the cell.

If the mobile terminals in FIG. 2A and FIG. 2B stay a same duration in the cells shown in the figures, a moving speed of the mobile terminal in FIG. 2A is higher than a moving speed of the mobile terminal in FIG. 2B.

By identifying a moving path of a mobile terminal in a cell of a serving base station, such as tangentially or radially traveling through the cell of the serving base station, the serving base station may obtain a distance that the mobile terminal moves in the cell of the serving base station.

Specifically, when the mobile terminal travels through the cell of the serving base station as shown in FIG. 2A, measured reference signal received power (Reference Signal Receiving Power, RSRP) of the serving base station changes from very weak to very strong, and then to very weak. Further, when the mobile terminal travels through the cell of the serving base station tangentially as shown in FIG. 2B, measured RSRP of the serving base station changes from very weak to weak, and then to very weak.

When the RSRP is very weak, the mobile terminal is located at an edge of the cell of the serving base station; when the RSRP is weak, the mobile terminal is still located at an edge of the cell of the serving base station; and when the RSRP is very strong, the mobile terminal is located at the center of the cell of the serving base station. Therefore, in FIG. 2A, a moving path of the mobile terminal may be considered as from a cell edge to a cell center, and then to a cell edge; and in FIG. 2B, a moving path of the mobile terminal may be considered as always on a cell edge. It can be seen that, in FIG. 2A, the mobile terminal in the cell, which is shown in the figure, of the serving base station moves a longest distance; and in FIG. 2B, the mobile terminal in the cell, which is shown in the figure, of the serving base station moves a shortest distance. When a mobile terminal moves along another path, a distance that the mobile terminal moves in the cell is between the preceding two distances. It can be concluded that, the stronger maximum downlink signal receive power that the mobile terminal receives, the longer distance that the mobile terminal moves in the cell.

The serving base station, by estimating signal strength, such as a UE measuring the downlink signal receive power of a base station or a base station measuring the uplink signal receive power of a UE, obtains the distance that the mobile terminal moves in the cell of the serving base station, that is, the distance that the mobile terminal travels through the cell of the serving base station.

A parameter used for estimating the distance that the mobile terminal moves in the cell of the serving base station, for convenience of description, is called a distance estimation parameter.

The distance estimation parameter may specifically be receive power or a path loss. They are essentially the same, because the path loss = transmit power - receive power, where the transmit power is already known. The distance estimation parameter may be a statistical minimum value, maximum value, or average value, or some sampled typical values.

A most basic signal used for calculating the distance estimation parameter may be a downlink signal of a base station that is measured by a UE or an uplink signal of a UE that is measured by a base station.

The following are specific embodiments that provide more details about the method for obtaining a moving speed of a mobile terminal.

### Embodiment 1

In this embodiment, a distance estimation parameter is maximum downlink signal receive power and a mobile terminal is a UE. As shown in FIG. 3, the method for obtaining a moving speed of a mobile terminal includes:

Step 31: A serving base station obtains maximum downlink signal receive power that is measured and reported by a UE, where the downlink signal is a signal sent by the serving base station to the UE.

For example, a plurality of measuring report trigger thresholds is configured in measuring configuration that the serving base station providess to the UE, and when certain measured downlink signal receive power is greater than or equal to the trigger threshold, the UE reports a currently measured receive power value of the serving base station. According to one or more measured receive power values reported by the UE, the base station takes a maximum measured value as the maximum downlink signal receive power.

Alternatively, for example, a reporting period is configured in measuring configuration that the serving base station provides to the UE, and the UE periodically reports currently measured downlink signal receive power according to the reporting period. The downlink signal is a signal sent by the serving base station to the UE. Among one or more measured downlink signal receive power values reported by the UE, the base station takes a maximum value as the maximum downlink signal receive power.

Step 32: According to the obtained maximum downlink signal receive power, obtain a distance that the UE moves in a cell of the serving base station. Specifically, the following methods are available:

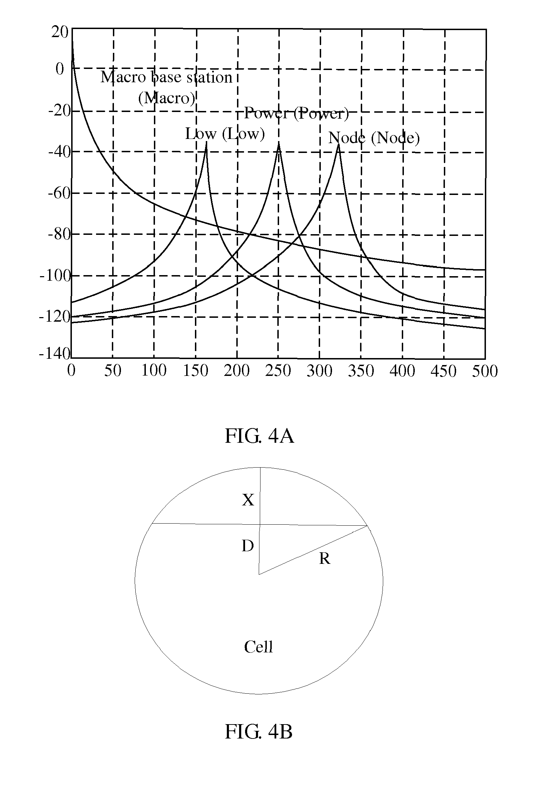

A first method is, according to a change relationship between maximum downlink signal receive power and a distance between a UE and a serving base station that is shown in FIG. 4A, obtaining a distance that corresponds to the maximum downlink signal receive power obtained in step 31. It is assumed that, the maximum downlink signal receive power corresponds to a distance D as shown in FIG. 4B, and a radius of the cell of the serving base station is a known R. By using the Pythagorean Theorem, a distance X may be calculated as ((X/2)^2 + D^2 = R^2). X may be considered as the distance that the UE moves in the cell of the serving base station.

A second method is forming empirical data by using the distance that the UE moves in the cell of the serving base station, which is obtained in the first method. Specifically, for example, by storing a mapping relationship between maximum downlink signal receive power and the distance that the UE moves in the cell of the serving base station, which is obtained according to the maximum downlink signal receive power, a mapping relationship table of the two is obtained as shown in table 1.

**Table 1**

| **Maximum Downlink Signal Receive Power** | **Distance of a UE Traveling Through a Serving Cell** |
|---|---|
| 30 dB | 100 m |
| 23 dB | 50 m |
| 20 dB | 20 m |
| 17 dB | 10 m |

Subsequently, by looking up the table, a distance that the UE moves in the cell of the serving base station can be obtained according to obtained maximum downlink signal receive power.

A third method is using a formula:
distance that the UE moves in the cell of the serving base station = (maximum downlink signal receive power / transmit power of the base station) x cell radius,
so as to obtain the distance that the UE moves in the cell of the serving base station, where the transmit power of the base station and the cell radius are known by the serving base station, and the maximum downlink signal receive power is a variable and is obtained in step 31.

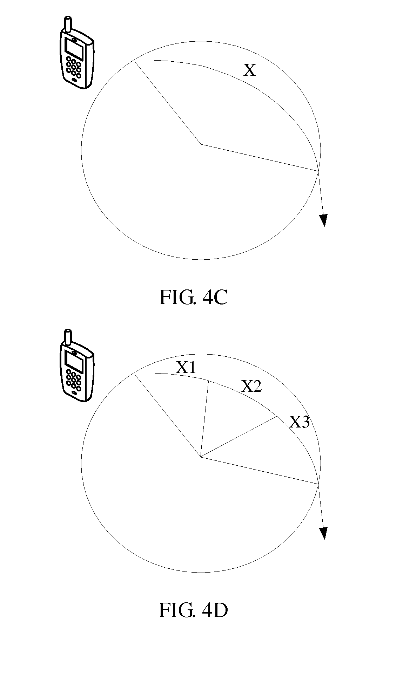

A fourth method is, as shown in FIG. 4C, obtaining an angular velocity of the UE and then obtain the distance that the UE moves in the cell of the serving base station according to the maximum downlink signal receive power and the obtained angular velocity of the UE.

The angular velocity may be obtained by using the following methods:
For example, within a period, the serving base station obtains angles of arrive (Angle Of Arrive, AOA) at two moments, that is, beam directions of an uplink signal, and then obtains an angle between the AOAs, and an angular velocity = angle between AOAs at two moments / time difference between the two moments. Alternatively, according to the angle between the AOAs and the UE-to-serving base station distance, by using a mathematical formula L = angle between AOAs x radius (that is, UE-to-serving base station distance), the arc length between two moments, that is, the moving distance of the UE, may be directly obtained through calculation.

Alternatively, for example, within a period, the serving base station obtains an angle between beams (Beam) at two moments, that is, an angle between beam directions of a downlink signal at two moments, and an angular velocity = angle between beams at two moments/time difference between the two moments. Alternatively, according to the angle between the beams and the UE-to-serving base station distance, by using a mathematical formula L = angle between beams x radius (that is, UE-to-serving base station distance), the arc length between two moments, that is, the moving distance of the UE, may be directly obtained through calculation.

The distance that the UE moves in the cell of the serving base station may be obtained by using the following formulas:
distance that the UE moves in the cell of the serving base station = minimum distance from the UE to the base staion x angular velocity x time difference between two moments, or
distance that the UE moves in the cell of the serving base station = (minimum distance from UE tobase station + serving cell radius) / 2 x angular velocity x time difference between two moments.

The minimum distance between the UE and the serving base station may be obtained according to the maximum downlink signal receive power.

A fifth method, in consideration of that the UE may move along a curve in the cell, uses the fourth method to calculate section-by-section the distance that the UE moves in the cell of the serving base station, so as to more precisely estimate the distance that the UE moves in the cell of the serving base station and therefore more precisely evaluate a moving speed of the UE in the cell of the serving base station.

Specifically, as shown in FIG. 4D, the serving base station cuts the moving path of the UE in the cell of the serving base station into three sections: X1, X2, and X3, and calculates the length of each section by using the fourth method, and then obtains the distance X= X1+X2+X3 that the UE moves in the cell of the serving base station.

A sixth method is: A network-side device such as a base station, a location server, or a configuration management entity collects geographical location information and signal characteristic information of the location (information about the maximum downlink signal receive power) and a corresponding cell identity, so as to form a radio frequency fingerprint database and store it. Forming the radio frequency fingerprint database specifically is collecting signal characteristics of each location within the coverage of a cell, such as RSRP and RSRQ, as well as a list of each location (latitude and longitude) and a cell identity corresponding to each location. Because a location may correspond to a plurality of cells and therefore may correspond to a plurality of cell identities, that is, a location may correspond to a list of cell identities.

The base station obtains downlink signal receive power information in the serving cell that is reported by the UE and a corresponding list of cell identities. By looking up the radio frequency fingerprint database, a corresponding location of the UE may be obtained. According to information (the downlink signal receive power information and list of cell identities) reported in two times by the UE, two geographical locations are obtained, and by using the two geographical locations, the distance that the UE moves in the cell of the serving base station is obtained.

Step 33: The serving base station, by using an interval between two times of the UE reporting measuring reports and the distance that the UE moves in the cell of the serving base station that is obtained in step 32, obtains a moving speed of the UE in the cell of the serving base station. Specifically, the distance that the UE moves in the cell of the serving base station is divided by the interval between the two times of the UE reporting measuring reports.

The two times of the UE reporting measuring reports may specifically be any two moments, for example, the moment of entering the cell or leaving the cell, or any two points in the center of the serving cell, or the measuring configuration that the serving base station triggers UE to report the measuring reports in step 31.

Optionally, step 34 may be further included: The serving base station may transfer the calculated moving speed of the UE to a target cell during handover of the UE. In this way, the target cell may make reference to previous speed information of the UE for handover optimization or speed evaluation of the UE. The speed evaluation refers to processing a previous speed and a currently estimated speed of the UE, for example, weighted average or smooth estimation. The handover optimization may specifically be implementing operations such as access control and scheduling optimization according to the speed of the UE that is indicated by a source cell. The access control may be that, if the moving speed of the UE is very fast and the coverage of the target cell is very small, the target cell may refuse to admit the UE; and the scheduling optimization may be that, if the moving speed of the UE is very fast, the target cell may use conservative modulation and coding speed (MCS) for an accessing high-speed UE, adapting to a channel change caused by a high speed.

### Embodiment 2

This embodiment is similar to the Embodiment 1 and the difference lies in that a distance estimation parameter is maximum uplink signal receive power that a base station receives from a UE. Specifically, by using a method similar to the first method of Embodiment 1 and using the maximum uplink signal receive power and the Pythagorean Theorem, a distance that a UE moves in a cell of a serving base station is obtained; then, by dividing the distance that the UE moves in the cell of the serving base station by the duration that the UE stays in the cell of the serving base station, a moving speed of the UE in the cell of the serving base station may be obtained.

Further, empirical data may be formed, for example, by storing, in mapping, maximum uplink signal receive power and the distance that the UE moves in the cell of the serving base station, which is obtained according to the maximum uplink signal receive power, a mapping relationship table of the two is obtained. Subsequently, when the moving speed of the UE in the cell needs to be calculated, only the maximum uplink signal receive power needs to be obtained, then, by looking up empirical data, a distance that the UE moves in the cell may be obtained; and then, by dividing the distance that the UE moves in the cell by the duration that the UE stays in the cell, the moving speed of the UE in the cell may be obtained.

### Embodiment 3

This embodiment is similar to Embodiment 1, and the difference lies in that a distance estimation parameter is average downlink signal receive power.

Because the average downlink signal receive power is calculated by using maximum downlink signal receive power, a distance that a UE moves in a cell may be obtained by using a mapping relationship between the average downlink signal receive power and the maximum downlink signal receive power, as well as a mapping relationship between the maximum downlink signal receive power and a UE-to-serving base station distance, or using a mapping relationship between the maximum downlink signal receive power and the distance that the UE moves in the cell; and then, by dividing the distance that the UE moves in the cell by the duration that the UE stays in the cell, a moving speed of the UE in the cell is obtained.

### Embodiment 4

This embodiment is similar to Embodiment 1, and the difference lies in that a distance estimation parameter is a minimum downlink path loss.

Because the minimum downlink path loss equals to transmit power minus maximum downlink signal receive power, a distance that a UE moves in a cell may be obtained by using a mapping relationship between the minimum downlink path loss and the maximum downlink signal receive power, as well as a mapping relationship between the maximum downlink signal receive power and a UE-to-serving base station distance, or using a mapping relationship between the maximum downlink signal receive power and a distance that the UE moves in the cell; and then, by dividing the distance that the UE moves in the cell by the duration that the UE stays in the cell, a moving speed of the UE in the cell is obtained.

### Embodiment 5

This embodiment provides another method for obtaining a moving speed of a mobile terminal, including:
establishing a signaling connection with a mobile terminal; and
obtaining a moving speed of the mobile terminal by receiving information reported by the mobile terminal through the signaling connection established with the mobile terminal.

For example, a moving speed in an idle state that is reported by the mobile terminal is received through the signaling connection established with the mobile terminal. Alternatively, for example, through the signaling connection with the mobile terminal, information about reselecting a cell and the duration that the mobile terminal stays in the selected cell that are sent by the mobile terminal are received; by using the information about reselecting a cell and the duration that the mobile terminal stays in the selected cell, and the moving speed of the mobile terminal is obtained.

In this embodiment, the executor is a serving base station of the preceding mobile terminal.

Accordingly, on a mobile terminal side, this embodiment further provides a method for a base station to obtain a moving speed of a mobile terminal, including:
establishing a signaling connection with a serving base station; and
reporting information to the serving base station through the signaling connection established with the serving base station, so as to enable the serving base station to obtain a moving speed of a mobile terminal according to the information; for example, reporting a moving speed in an idle state to the serving base station through the signaling connection with the serving base station; or, sending information about reselecting a cell and the duration of staying in the selected cell to the serving base station through the signaling connection with the serving base station.

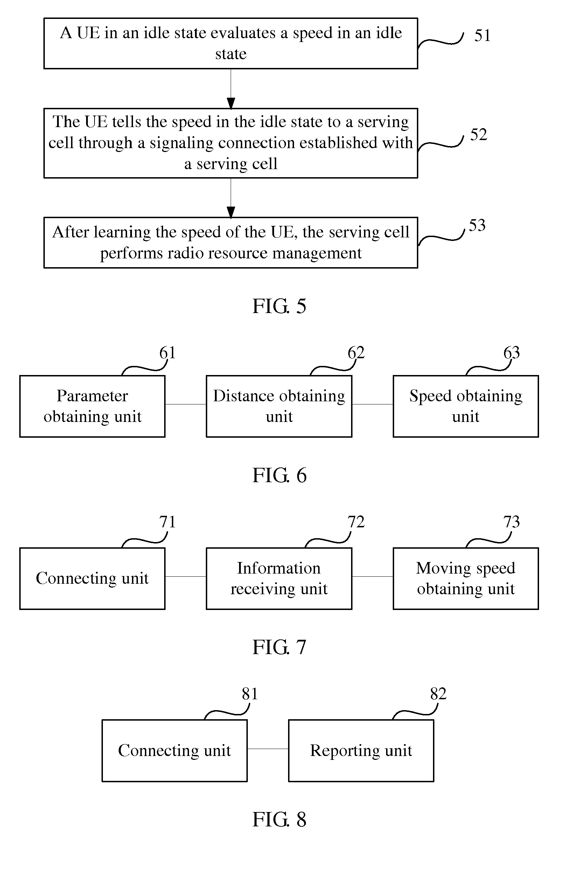

FIG. 5 is a flowchart of another method for obtaining a moving speed of a mobile terminal according to an embodiment of the present invention. As shown in FIG. 5, the procedure is as follows:
Step 51: A UE in an idle (Idle) state evaluates a speed in an Idle state.
Step 52: Through a signaling connection with a serving cell, the UE tells the speed in the Idle state to the serving cell.

i. The UE sends evaluation of the speed in an Idle state of the UE to a base station through a signaling connection with the base station. In this way, the base station learns a speed of the current UE; and especially when the idle state changes to a connected state, the base station immediately learns the speed of the UE, that is, uses the speed in the Idle state as a speed in the connected state. Even through the UE previously stays in the Idle state (the base station does not have historical information of the UE and cannot calculate a speed through the previous a), the base station may also learn the speed of the UE when the UE changes to the connected state. For example, when the UE is in the Idle state, cell reselecting occurs three times within 60s; and it is assumed that a high speed is obtained according to speed evaluation, the UE sends "high speed" to the base station through the signaling connection with the base station.

Optionally, the UE may report the information about a reselected cell and the duration of staying in the selected cell to the serving base station; in this way, the serving base station may obtain the moving speed of the UE by using the times of cell reselecting and the time of the reselecting. The information about a reselected cell may be a cell identity (ID), a cell type, and so on. The cell type may be a cell size and so on. For example, the UE may report at least one piece of information: cell type information (such as a macro cell/a pico cell/a femto cell, cell transmit power information, and a big cell/a small cell/a very small cell, and the type information may be specifically obtained from broadcast information in a cell, that is, the base station side needs to broadcast the information), a cell identity, and the duration of staying in each cell to the serving base station; and by using the information, the serving base station may obtain the moving speed of the UE in the idle state.

Further, optionally, after receiving the information such as the occurrence times of cell reselecting and the time of the reselecting that are reported by the UE, the base station transfers the information to a neighbor base station when handover is initiated subsequently. Specifically, the serving base station may add the information to a history information list of the UE. In this way, the neighbor base station may learn the information of the UE when the UE is previously in the idle state, such as the duration of staying in each cell, a cell identity, a cell type, and times of reselecting within a certain period; therefore, the neighbor base station may more precisely learn a current moving speed of the UE according to the information. For example, the neighbor base station estimates a historical moving speed of the UE according to the cell size information and the connection duration. Specially, the cell size information may be used for estimating a cell radius and the moving speed of the UE may be estimated by dividing the cell radius by the connection duration. For example, a large-size cell may be converted to 600 m and if the staying duration is 60s, the moving speed of the UE is 600 m/60s = 10 m/s = 36 km/h.

Step 53: After learning the speed of the UE, the serving cell performs radio resource management (Radio Resource Management, RRM), specifically, such as speed evaluation of the UE, access control optimization, and scheduling optimization. For details, refer to the description in Embodiment 1.

Optionally, similar to Embodiment 1, the procedure of this embodiment may further include step 54: The serving base station transfers the obtained moving speed of the UE to a target cell during handover of the UE. For details, refer to the description in Embodiment 1.

### Embodiment 6

In this embodiment, a serving base station obtains a moving speed of a UE from a base station of a source cell before handover of the UE. Specifically, in Embodiment 1 and Embodiment 5, the serving base station sends an obtained moving speed of the UE to a base station of a target cell to which the UE hands over; the serving base station in this embodiment may be considered as the base station of the target cell in Embodiment 1 and Embodiment 5; and accordingly, the base station of the source cell may be considered as the serving base station in Embodiment 1 and Embodiment 5.

A method for the source cell obtaining the moving speed of the UE is not limited to the method in Embodiment 1 to Embodiment 5 and may be another method as long as the moving speed of the UE can be obtained.

Optionally, similar to Embodiment 1 and Embodiment 5, the serving base station, according to the moving speed of the UE before the handover, that is, the moving speed of the UE that is obtained from the base station of the source cell, performs handover optimization or speed evaluation.

Persons of ordinary skill in the art should understand that, all or part of the steps of the foregoing method embodiments may be implemented by a program instructing relevant hardware. The foregoing program may be stored in a computer readable storage medium. When the program runs, the above steps included in the method embodiments are performed. The foregoing storage medium may be any medium capable of storing program codes, such as a ROM, a RAM, a magnetic disk, or an optical disk.

FIG. 6 is a schematic structural diagram of a base station according to an embodiment of the present invention. The base station provided by this embodiment is adapted to implement the method of the embodiment shown in FIG. 1, may be a serving base station of a UE, and as shown in FIG. 6, includes: a parameter obtaining unit 61, a distance obtaining unit 62, and a speed obtaining unit 63. Persons skilled in the art should understand that, the base station provided by this embodiment should further include a basic functional unit of the base station such as radio frequency processing unit, which is not a key point of the present invention and is not described herein.

The parameter obtaining unit 61 is adapted to obtain a distance estimation parameter, where the distance estimation parameter is used for estimating a distance that a mobile terminal moves in a cell of a serving base station. The distance obtaining unit 62 is adapted to obtain, according to the obtained distance estimation parameter, the distance that the mobile terminal moves in the cell of the serving base station. The speed obtaining unit 63 is adapted to: by using the distance that the mobile terminal moves in the cell of the serving base station and the duration that the mobile terminal stays in the cell of the serving base station, obtain a moving speed of the mobile terminal in the cell of the serving base station. The distance estimation parameter may be maximum uplink signal receive power, average uplink signal receive power, maximum downlink signal receive power, average downlink signal receive power, a minimum downlink path loss, an average downlink path loss, a minimum uplink path loss, or an average uplink path loss. For details, refer to the description in the forgoing method embodiments.

The parameter obtaining unit 61 is specifically adapted to receive measured maximum downlink signal receive power reported by the mobile terminal.

The base station provided by the embodiment of the present invention may further include: a configuration unit, adapted to configure a measuring report trigger threshold or a reporting period for the measurement by the mobile terminal before the parameter obtaining unit receives the measured maximum downlink signal receive power reported by the mobile terminal. Accordingly, the parameter obtaining unit may include: a downlink power receiving sub-unit and a maximum power selection sub-unit.

The downlink power receive sub-unit is adapted to receive downlink signal receive power reported by the mobile terminal when the mobile terminal measures that the downlink signal receive power meets the trigger threshold, or receive downlink signal receive power periodically reported by the mobile terminal according to the reporting period.

The maximum power selection sub-unit is adapted to select maximum downlink signal receive power among the received downlink signal receive power as the maximum downlink signal receive power.

The distance obtaining unit may include: a current distance obtaining sub-unit and a first moving distance obtaining sub-unit.

The current distance obtaining sub-unit is adapted to: according to a mapping relationship between the maximum downlink signal receive power and a distance from the mobile terminal to the serving base station, obtain a current distance from the mobile terminal to the serving base station.

The first moving distance obtaining sub-unit is adapted to obtain, by using the current distance and the Pythagorean Theorem, .the distance that the mobile terminal moves in the cell of the serving base station

The base station provided by the embodiment of the present invention may further include: a relationship storage unit, adapted to: after the process in which the distance obtaining unit obtains, according to the obtained distance estimation parameter, the distance that the mobile terminal moves in the cell of the serving base station, store the maximum downlink signal receive power and the obtained distance that the mobile terminal moves in the cell of the serving base station in mapping. In the description of the preceding method embodiment, by storing the mapping relationship between the maximum downlink signal receive power and the obtained distance that the mobile terminal moves in the cell of the serving base station, a empirical value may be obtained for subsequent speed calculation.

The distance obtaining unit may be specifically adapted to find, according to the stored mapping relationship between the maximum downlink signal receive power and the distance that the mobile terminal moves in the cell of the serving base station, the distance that the mobile terminal moves in the cell of the serving base station

Alternatively, the distance obtaining unit may be specifically adapted to divide the maximum downlink signal receive power by signal transmit power of the serving base station and multiply a dividing result by a cell radius of the cell of the serving base station to obtain the distance that the mobile terminal moves in the cell of the serving base station.

Alternatively, the distance obtaining unit may include: an angular velocity obtaining sub-unit and a second moving distance obtaining sub-unit.

The angular velocity obtaining sub-unit is adapted to obtain an angular velocity of the mobile terminal according to the maximum downlink signal receive power; and the second moving distance obtaining sub-unit is adapted to obtain, according to the angular velocity, the distance that the mobile terminal moves in the cell of the serving base station

Alternatively, the distance obtaining unit may include: a location obtaining sub-unit and a third moving distance obtaining sub-unit.

The location obtaining sub-unit is adapted to obtain, while receiving the downlink signal receive power reported by the mobile terminal, corresponding geographical location information of the mobile terminal; and the third moving distance obtaining sub-unit is adapted to obtain, according to the geographical location information., the distance that the mobile terminal moves in the cell of the serving base station

The base station provided by the embodiment of the present invention may further include: a sending unit, adapted to send the moving speed of the mobile terminal to a base station of a target cell.

FIG. 7 is a schematic structural diagram of another base station according to an embodiment of the present invention. The base station provided by this embodiment is adapted to implement the method shown in Embodiment 5, and as shown in FIG. 7, includes: a connecting unit 71, an information receiving unit 72, and a moving speed obtaining unit 73. Persons skilled in the art should understand that, the base station provided by this embodiment should further include a basic functional unit of the base station such as radio frequency processing unit, which is not a key point of the present invention and is not described herein.

The connecting unit 71 is adapted to establish a signaling connection with a mobile terminal. The information receiving unit 72 is adapted to receive information reported by the mobile terminal through the signaling connection established with the mobile terminal. The moving speed obtaining unit 73 is adapted to obtain a moving speed of the mobile terminal according to the information reported by the mobile terminal.

For example, the information receiving unit 72 is specifically adapted to receive a moving speed in an idle state that is reported by the mobile terminal through the signaling connection with the mobile terminal. Alternatively, for example, the information receiving unit 72 may be specifically adapted to receive the times of cell reselecting and the time of the reselecting that are sent by the mobile terminal; and accordingly, the moving speed obtaining unit 73 may be specifically adapted to obtain the moving speed of the mobile terminal by using the times of cell reselecting and the time of the reselecting.

Optionally, the base station provided by the embodiment of the present invention may further include: a sending unit, adapted to send the information reported by the mobile terminal to a neighbor base station.

Optionally, the base station provided by the embodiment of the present invention may further include: a managing unit, adapted to perform radio resource management according to the obtained moving speed.

FIG. 8 is a schematic structural diagram of a mobile terminal according to an embodiment of the present invention. The mobile terminal provided by this embodiment is adapted to implement the method for a base station to obtain a moving speed of a mobile terminal that is shown in Embodiment 5, and as shown in FIG. 7, includes a connecting unit 81 and a reporting unit 82. The connecting unit 81 is adapted to establish a signaling connection with a serving base station; and the reporting unit 82 is adapted to report information to the serving base station through the signaling connection established with the serving base station, so as to enable the serving base station to obtain a moving speed of the mobile terminal according to the information. For example, the reporting unit 82 may be specifically adapted to report a moving speed in an idle state to the serving base station through the signaling connection with the serving base station, or may be specifically adapted to send information about reselecting a cell and the duration of staying in the selected cell to the serving base station through the signaling connection with the serving base station. Persons skilled in the art should understand that, the mobile terminal provided by this embodiment should further include a basic functional unit of the mobile terminal such as signal receiving unit and radio frequency processing unit, which is not a key point of the present invention and is not described herein.

Alternatively, the base station provided by the embodiment of the present invention includes: a receiving unit, adapted to receive a moving speed of a mobile terminal in a source cell that is sent by a base station of the source cell. Persons skilled in the art should understand that, the base station provided by this embodiment should further include a basic functional unit of the base station such as radio frequency processing, which is not a key point of the present invention and is not described herein.

Optionally, the base station provided by the embodiment of the present invention may further include: a speed evaluation unit, adapted to evaluate a speed of the mobile terminal according to the received moving speed of the mobile terminal in the source cell.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as these modifications or replacements do not make the essence of corresponding technical solutions depart from the spirit and scope of the technical solution of the embodiments of the present invention.

## Claims

1. A method for obtaining a moving speed of a mobile terminal, comprising:
obtaining, by a serving base station, a distance estimation parameter, wherein the distance estimation parameter is used for estimating a distance that a mobile terminal moves in a cell of the serving base station;
obtaining, by the serving base station, according to the obtained distance estimation parameter, the distance that the mobile terminal moves in the cell of the serving base station; and
by using the distance that the mobile terminal moves in the cell of the serving base station and the duration that the mobile terminal stays in the cell of the serving base station, obtaining, by the serving base station, a moving speed of the mobile terminal in the cell of the serving base station.

2. The method for obtaining a moving speed of a mobile terminal according to claim 1, wherein the process of obtaining, by a serving base station, a distance estimation parameter comprises:
receiving, by the serving base station, measured maximum downlink signal receive power reported by the mobile terminal.

3. The method for obtaining a moving speed of a mobile terminal according to claim 2, before the receiving, by the serving base station, measured maximum downlink signal receive power reported by the mobile terminal, comprising: configuring, by the serving base station, a measuring report trigger threshold or a reporting period for the measurement by the mobile terminal;
wherein the process of receiving, by the serving base station, the measured maximum downlink signal receive power reported by the mobile terminal comprises:
receiving, by the serving base station, downlink signal receive power reported by the mobile terminal when the mobile terminal measures that the downlink signal receive power meets the trigger threshold, or receiving, by the serving base station, downlink signal receive power periodically reported by the mobile terminal according to the reporting period; and
selecting, by the serving base station, maximum downlink signal receive power among the received downlink signal receive power as the maximum downlink signal receive power.

4. The method for obtaining a moving speed of a mobile terminal according to claim 2, wherein the process of obtaining, according to the obtained distance estimation parameter, the distance that the mobile terminal moves in the cell of the serving base station comprises:
according to a mapping relationship between the maximum downlink signal receive power and a distance from the mobile terminal to the serving base station, obtaining a current distance from the mobile terminal to the serving base station; and
obtaining, by using the current distance and the Pythagorean Theorem, the distance that the mobile terminal moves in the cell of the serving base station.

5. The method for obtaining a moving speed of a mobile terminal according to claim 4, after the process of obtaining, according to the obtained distance estimation parameter, the distance that the mobile terminal moves in the cell of the serving base station, further comprising:
storing a mapping relationship between the maximum downlink signal receive power and the obtained distance that the mobile terminal moves in the cell of the serving base station.

6. The method for obtaining a moving speed of a mobile terminal according to claim 2, wherein the process of obtaining, according to the obtained distance estimation parameter, the distance that the mobile terminal moves in the cell of the serving base station comprises:
finding, according to the stored mapping relationship between the maximum downlink signal receive power and the distance that the mobile terminal moves in the cell of the serving base station, the distance that the mobile terminal moves in the cell of the serving base station.

7. The method for obtaining a moving speed of a mobile terminal according to claim 2, wherein the process of obtaining, according to the obtained distance estimation parameter, the distance that the mobile terminal moves in the cell of the serving base station comprises:
dividing the maximum downlink signal receive power by signal transmit power of the serving base station and multiplying a dividing result by a cell radius of the cell of the serving base station to obtain the distance that the mobile terminal moves in the cell of the serving base station.

8. The method for obtaining a moving speed of a mobile terminal according to claim 2, wherein the process of obtaining, according to the obtained distance estimation parameter, the distance that the mobile terminal moves in the cell of the serving base station comprises:
obtaining an angular velocity of the mobile terminal according to the maximum downlink signal receive power; and
obtaining, according to the angular velocity, the distance that the mobile terminal moves in the cell of the serving base station.

9. The method for obtaining a moving speed of a mobile terminal according to claim 1, wherein the process of obtaining, according to the obtained distance estimation parameter, the distance that the mobile terminal moves in the cell of the serving base station comprises:
obtaining, by the serving base station, while receiving downlink signal receive power reported by the mobile terminal, corresponding geographical location information of the mobile terminal; and
obtaining, according to the geographical location information, the distance that the mobile terminal moves in the cell of the serving base station.

10. The method for obtaining a moving speed of a mobile terminal according to any one of claims 1 to 9, wherein the distance estimation parameter is maximum uplink signal receive power, average uplink signal receive power, maximum downlink signal receive power, average downlink signal receive power, a minimum downlink path loss, an average downlink path loss, a minimum uplink path loss, or an average uplink path loss.

11. The method for obtaining a moving speed of a mobile terminal according to any one of claims 1 to 9, further comprising:
sending, by the serving base station, the moving speed of the mobile terminal to a base station of a target cell.

12. A method for obtaining a moving speed of a mobile terminal, comprising:
establishing a signaling connection with a mobile terminal; and
receiving information reported by the mobile terminal through the signaling connection established with the mobile terminal; and
obtaining a moving speed of the mobile terminal.

13. The method for obtaining a moving speed of a mobile terminal according to claim 12, wherein the process of receiving information reported by the mobile terminal through the signaling connection established with the mobile terminal and obtaining a moving speed of the mobile terminal comprises:
receiving a moving speed in an idle state that is reported by the mobile terminal through the signaling connection established with the mobile terminal.

14. The method for obtaining a moving speed of a mobile terminal according to claim 12, wherein the process of receiving information reported by the mobile terminal through the signaling connection established with the mobile terminal and obtaining a moving speed of the mobile terminal comprises:
through the signaling connection with the mobile terminal, receiving information about a reselected cell and the duration that the mobile terminal stays in a selected cell, which are sent by the mobile terminal; and
by using the information about a reselected cell and the duration that the mobile terminal stays in a selected cell, obtaining the moving speed of the mobile terminal.

15. The method for obtaining a moving speed of a mobile terminal according to claim 13 or 14, further comprising:
sending the information reported by the mobile terminal to a neighbor base station.

16. The method for obtaining a moving speed of a mobile terminal according to any one of claims 12 to 15, further comprising:
performing radio resource management according to the obtained moving speed.

17. A method for obtaining a moving speed of a mobile terminal, comprising:
receiving a moving speed of a mobile terminal in a source cell that is sent by a base station of the source cell.

18. The method for obtaining a moving speed of a mobile terminal according to claim 17, further comprising:
evaluating a speed of the mobile terminal according to the received moving speed of the mobile terminal in the source cell.

19. A method for a base station to obtain a moving speed of a mobile terminal, comprising:
establishing a signaling connection with a serving base station; and
reporting information to the serving base station through the signaling connection established with the serving base station, so as to enable the serving base station to obtain a moving speed of a mobile terminal according to the information.

20. The method for a base station to obtain a moving speed of a mobile terminal according to claim 19, wherein the reporting information to the serving base station through the signaling connection established with the serving base station comprises:
reporting a moving speed in an idle state to the serving base station through the signaling connection with the serving base station.

21. The method for a base station to obtain a moving speed of a mobile terminal according to claim 19, wherein the reporting information to the serving base station through the signaling connection established with the serving base station comprises:
sending information about a reselected cell and the duration of staying in a selected cell to the serving base station through the signaling connection with the serving base station.

22. A base station, comprising:
a parameter obtaining unit, adapted to obtain a distance estimation parameter, wherein the distance estimation parameter is used for estimating a distance that a mobile terminal moves in a cell of a serving base station;
a distance obtaining unit, adapted to obtain, according to the obtained distance estimation parameter, the distance that the mobile terminal moves in the cell of the serving base station; and
a speed obtaining unit, adapted to: by using the distance that the mobile terminal moves in the cell of the serving base station and the duration that the mobile terminal stays in the cell of the serving base station, obtain a moving speed of the mobile terminal in the cell of the serving base station.

23. The base station according to claim 22, wherein the parameter obtaining unit is specifically adapted to receive measured maximum downlink signal receive power reported by the mobile terminal.

24. The base station according to claim 23, further comprising:
a configuration unit, adapted to: configure a measuring report trigger threshold or a reporting period for the measurement by the mobile terminal before the parameter obtaining unit receives the measured maximum downlink signal receive power reported by the mobile terminal; wherein
the parameter obtaining unit comprises:
a downlink power receive sub-unit, adapted to receive downlink signal receive power reported by the mobile terminal when the mobile terminal measures that the downlink signal receive power meets the trigger threshold, or receive downlink signal receive power periodically reported by the mobile terminal according to the reporting period; and
a maximum power selection sub-unit, adapted to select maximum downlink signal receive power among the received downlink signal receive power as the maximum downlink signal receive power.

25. The base station according to claim 23, wherein the distance obtaining unit comprises:
a current distance obtaining sub-unit, adapted to: according to a mapping relationship between the maximum downlink signal receive power and a distance from the mobile terminal to the serving base station, obtain a current distance from the mobile terminal to the serving base station; and
a first moving distance obtaining sub-unit, adapted to obtain, by using the current distance and the Pythagorean Theorem, the distance that the mobile terminal moves in the cell of the serving base station.

26. The base station according to claim 25, further comprising:
a relationship storage unit, adapted to: after the process in which the distance obtaining unit obtains, according to the obtained distance estimation parameter, the distance that the mobile terminal moves in the cell of the serving base station, store the maximum downlink signal receive power and the obtained distance that the mobile terminal moves in the cell of the serving base station in mapping.

27. The base station according to claim 23, wherein the distance obtaining unit is specifically adapted to find, according to a stored mapping relationship between the maximum downlink signal receive power and the distance that the mobile terminal moves in the cell of the serving base station, the distance that the mobile terminal moves in the cell of the serving base station.

28. The base station according to claim 23, wherein the distance obtaining unit is specifically adapted to divide the maximum downlink signal receive power by signal transmit power of the serving base station and multiplying a dividing result by a cell radius of the cell of the serving base station to obtain the distance that the mobile terminal moves in the cell of the serving base station.

29. The method for obtaining a moving speed of a mobile terminal according to claim 23, wherein the distance obtaining unit comprises:
an angular velocity obtaining sub-unit, adapted to obtain an angular velocity of the mobile terminal according to the maximum downlink signal receive power; and
a second moving distance obtaining sub-unit, adapted to obtain, according to the angular velocity the distance that the mobile terminal moves in the cell of the serving base station.

30. The base station according to claim 22, wherein the distance obtaining unit comprises:
a location obtaining sub-unit, adapted to obtain, while receiving downlink signal receive power reported by the mobile terminal, corresponding geographical location information of the mobile terminal; and
a third moving distance obtaining sub-unit, adapted to obtain, according to the geographical location information, the distance that the mobile terminal moves in the cell of the serving base station.

31. The base station according to any one of claims 22 to 30, wherein the distance estimation parameter is maximum uplink signal receive power, average uplink signal receive power, maximum downlink signal receive power, average downlink signal receive power, a minimum downlink path loss, an average downlink path loss, a minimum uplink path loss, or an average uplink path loss.

32. The base station according to any one of claims 22 to 30, further comprising:
a sending unit, adapted to send the moving speed of the mobile terminal to a base station of a target cell.

33. A base station, comprising:
a connecting unit, configured to establish a signaling connection with a mobile terminal;
an information receiving unit, configured to receive information reported by the mobile terminal through the signaling connection established with the mobile terminal; and
a moving speed obtaining unit, configured to obtain a moving speed of the mobile terminal according to the information reported by the mobile terminal.

34. The base station according to claim 33, wherein the information receiving unit is specifically configured to receive a moving speed in an idle state that is reported by the mobile terminal through the signaling connection established with the mobile terminal.

35. The base station according to claim 33, wherein the information receiving unit is specifically configured to receive times of cell reselecting and time of the reselecting that are sent by the mobile terminal; and
the moving speed obtaining unit is specifically configured to obtain the moving speed of the mobile terminal by using the times of cell reselecting and the time of the reselecting.

36. The base station according to claim 34 or 35, further comprising:
a sending unit, configured to send the information reported by the mobile terminal to a neighbor base station.

37. The base station according to any one of claims 33 to 36, further comprising:
a managing unit, configured to perform radio resource management according to the obtained moving speed.

38. A mobile terminal, comprising:
a connecting unit, configured to establish a signaling connection with a serving base station; and
a reporting unit, configured to report information to the serving base station through the signaling connection established with the serving base station, so as to enable the serving base station to obtain a moving speed of the mobile terminal according to the information.

39. The mobile terminal according to claim 38, wherein the reporting unit is specifically configured to report a moving speed in an idle state to the serving base station through the signaling connection established with the serving base station, or specifically configured to send information about reselecting a cell and the duration of staying in the selected cell to the serving base station through the signaling connection established with the serving base station.

40. A base station, comprising:
a receiving unit, adapted to receive a moving speed of a mobile terminal in a source cell that is sent by a base station of the source cell.

41. The base station according to claim 40, further comprising:
a speed evaluation unit, adapted to evaluate a speed of the mobile terminal according to the received moving speed of the mobile terminal in the source cell.
